# EUROPÄISCHE PATENTANMELDUNG

(11) **EP 1 002 595 A2**
(43) Veröffentlichungstag der Anmeldung: **24.05.2000**
(21) Anmeldenummer: 99122082.3
(22) Anmeldetag: 16.11.1999
(51) Int. Cl.: B21D 43/05

(54) **Vorrichtung und Verfahren zum Umformen**

(30) Priorität: 19.11.1998 DE 19853366
(71) Anmelder: Schuler Pressen GmbH & Co. KG, 73033 Göppingen (DE)
(72) Erfinder: Wegener, Konrad, Dr.-Ing., 73033 Göppingen (DE); Hofele, Hans, 73035 Göppingen (DE)

(57) **Zusammenfassung**

Eine Vorrichtung zum Umformen von Werkstücken mit wenigstens einem Umformwerkzeug weist wenigstens eine Bearbeitungseinrichtung mit lokalem Energieeintrag auf, welche zur Bearbeitung der Werkstücke als separate Stufe innerhalb der Umformvorrichtung vorgesehen ist.

## Beschreibung

Die Erfindung betrifft eine Vorrichtung und ein Verfahren zum Umformen von Werkstücken nach der im Oberbegriff der Ansprüche 1 und 27 näher definierten Art.

Derartige Vorrichtungen sind in Verbindung mit entsprechenden Verfahren beispielsweise aus der DE 38 32 499 A1, der DE 39 05 069 A1, der EP 04 39 684 B1 oder der EP 05 47 190 B1 bekannt.

Bei den mit solchen Vorrichtungen hergestellten Werkstücken handelt es sich meist um Blechteile und es kommen die verschiedensten Umformverfahren zum Einsatz, wie z.B. Tiefziehen, Stanzen, Schneiden oder Prägen.

Da meist sehr große Werkstücke hergestellt werden, sind im Regelfall auch sehr große Umformwerkzeuge notwendig, deren Masse bei jedem Arbeitstakt bzw. Hub der Umformvorrichtung beschleunigt und abgebremst werden müssen. Zum einen ist dabei nachteiligerweise ein sehr großer Materialaufwand zur Bildung der Umformwerkzeuge notwendig und es wird zum anderen sehr viel Energie benötigt.

Ein noch größeres Problem stellen die sehr langen Entwicklungszeiten für die Umformwerkzeuge dar, welche beispielsweise bei der Entwicklung eines Kraftfahrzeugs einen sehr großen Anteil der gesamten Entwicklungszeit einnehmen. Eventuelle Änderungen an den Umformwerkzeugen führen nachteiligerweise zu einem hohen Aufwand.

Es ist daher Aufgabe der vorliegenden Erfindung, eine Vorrichtung zum Umformen von Werkstücken zu schaffen, mittels welcher durch verringerten Material- und Entwicklungsaufwand ein gleiches oder besseres Umformergebnis erbracht werden kann, wie dies mit bekannten Umformvorrichtungen möglich ist. Des weiteren soll ein größtmögliches Maß an Flexibilität bei der Umrüstung dadurch erreicht werden, daß die Umstellung auf ein anderes Produkt möglichst weitgehend durch Umprogrammierung erfolgen kann.

Erfindungsgemäß wird diese Aufgabe durch die im kennzeichnenden Teil von Anspruch 1 genannten Merkmale gelöst.

Erfindungsgemäß weist nunmehr die Umformvorrichtung eine Bearbeitungseinrichtung mit lokalem Energieeintrag auf, mittels welcher die in der Umformvorrichtung bearbeiteten Werkstücke einer zusätzlichen bzw. einer bisher notwendige Schritte ersetzenden Bearbeitung unterzogen werden können. Eine derartige Bearbeitungseinrichtung bringt den Vorteil mit sich, daß sie eine sehr geringe Masse besitzt und darüber hinaus derart an der bestehenden Umformvorrichtung angeordnet werden kann, daß sie zur Bearbeitung nicht oszillierend, also nicht mit großem Energieeinsatz bewegt werden muß.

Darüber hinaus ist vorteilhaft, daß die erfindungsgemäße Einrichtung zur Umstellung auf andere Produkte sehr einfach umprogrammiert werden kann. Eventuelle Änderungen an den herzustellenden Werkstücken können sehr einfach und ohne großen Aufwand berücksichtigt werden.

Lokaler Energieeintrag bedeutet im vorliegenden Zusammenhang, daß die Ausdehnung der energiebeeinflußten Zone bzw. des Bearbeitungsbereiches ohne Relativbewegung zwischen Werkstück und Bearbeitungseinrichtung klein ist im Vergleich mit der Werkstückabmessung.

Eine verfahrensgemäße Lösung der Aufgabe ergibt sich aus dem kennzeichnenden Teil von Anspruch 27.

Zum allgemeinen Stand der Technik bezüglich Laser-Bearbeitungseinrichtungen in Werkzeugmaschinen wird auf die DE 34 10 913 A1, die DE 41 28 194 C2 und die EP 00 08 773 B1 verwiesen.

Vorteilhafte Ausgestaltungen und Weiterbildungen der Erfindung ergeben sich aus den Unteransprüchen und aus dem nachfolgend anhand der Zeichnung prinzipmäßig dargestellten Ausführungsbeispiel.

Es zeigt:
- Fig. 1: eine erfindungsgemäße Umformvorrichtung in einer dreidimensionalen Darstellung;
- Fig. 2: eine Seitenansicht einer anderen Ausführungsform der Umformvorrichtung;
- Fig. 3: eine Draufsicht auf die Umformvorrichtung aus Fig. 2;
- Fig. 4: eine Draufsicht auf eine erste Möglichkeit der Integration von erfindungsgemäßen Bearbeitungseinrichtungen in einer Vorrichtung zur Umformung;
- Fig. 5: einen Schnitt durch die erste Umformstufe nach der Linie V-V aus Fig. 4 mit einer zusätzlichen Handhabungseinrichtung zur Einbringung von Verstärkungsplatinen;
- Fig. 6: eine Draufsicht auf eine zweite Möglichkeit der Integration von erfindungsgemäßen Bearbeitungseinrichtungen in einer Vorrichtung zur Umformung;
- Fig. 7: eine Darstellung einer Abwandlung der in Fig. 6 dargestellten Umformvorrichtung;
- Fig. 8: eine Seitenansicht gemäß dem Pfeil VIII aus Fig. 6;
- Fig. 9: eine alternative Ausführungsform zu der Darstellung gemäß Fig. 8 mit einem Roboter mit Parallelkinematik als Handhabungseinrichtung;
- Fig. 10: eine alternative Ausführungsform zu der Darstellung gemäß Fig. 7;
- Fig. 11: eine weitere alternative Ausführungsform zu der Darstellung gemäß Fig. 7;
- Fig. 12: eine alternative Ausführungsform der Umformvorrichtung zum Schneiden nicht ebener Platinen;
- Fig. 13: eine weitere alternative Ausführungsform der Umformvorrichtung zum Schneiden nicht ebener Platinen;
- Fig. 14: eine weitere alternative Ausführungsform der Umformvorrichtung zum Schneiden nicht ebener Platinen;
- Fig. 15: einen Schnitt nach der Linie XV - XV aus Fig. 14;
- Fig. 16: eine Anordnung einer Laser-Bearbeitungseinrichtung in einem Umformwerkzeug, nämlich in einem Hohlraum eines Oberwerkzeugs;
- Fig. 17: eine Anordnung einer Laser-Bearbeitungseinrichtung in einem Umformwerkzeug, nämlich in einem Hohlraum eines Unterwerkzeugs; und
- Fig. 18: eine Anordnung einer Laser-Bearbeitungseinrichtung in einem Umformwerkzeug, nämlich direkt in dem Unterwerkzeug.

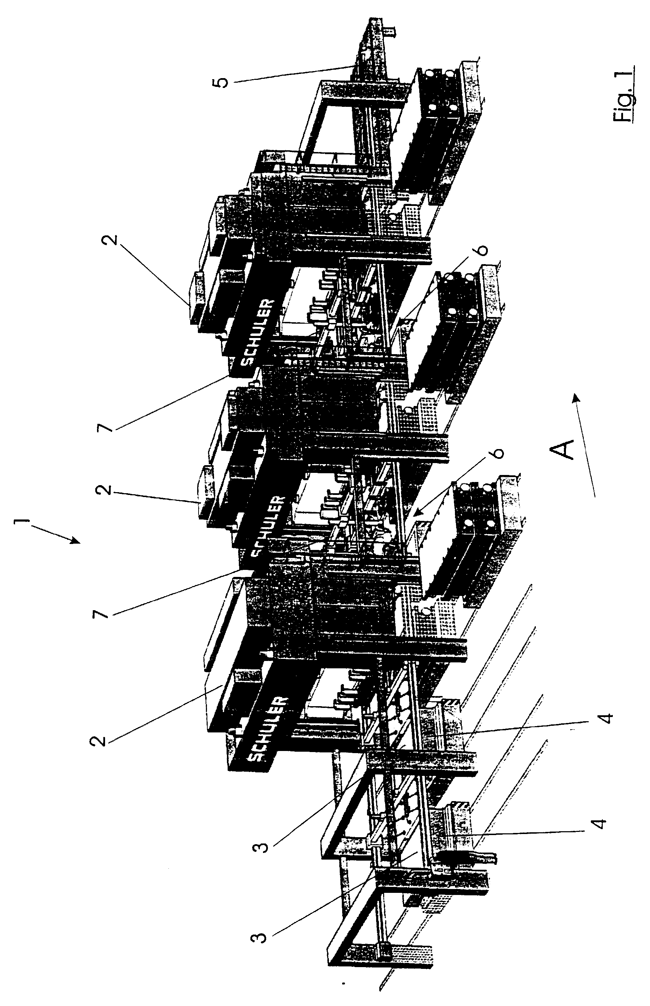

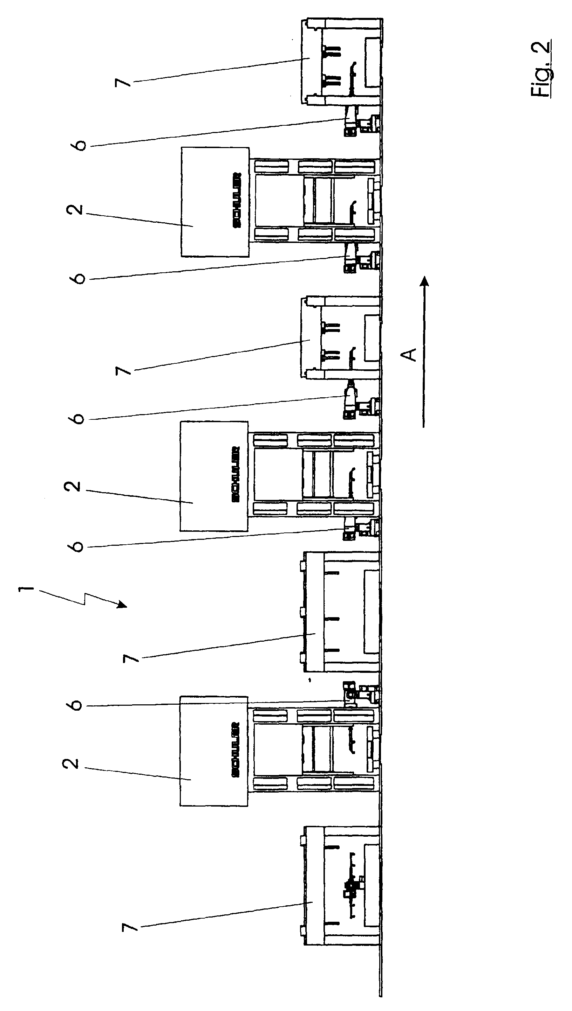

Die Figuren 1, 2 und 3 zeigen eine Umformvorrichtung 1, welche mehrere Umformstufen 2 aufweist und daher auch als Mehrstufenumformanlage bezeichnet wird. In an sich bekannter Weise werden dabei aus Blechen 3, welche der Umformvorrichtung 1 in Form von Blechstapeln aus sogenannten Platinenladern 4 zugeführt werden, bestimmte Werkstücke 5 hergestellt, in diesem Fall z.B. eine Tür eines Kraftfahrzeugs. Die Bleche 3 bzw. die Werkstücke 5 durchlaufen dabei die Umformstufen 2 der Umformvorrichtung 1 der Reihe nach und werden durch Transporteinrichtungen 6 von einer Umformstufe 2 zur nächsten Umformstufe 2 weitergegeben. Hierbei können die Umformstufen z.B. mechanische Pressen, hydraulische Pressen, sonstige hydraulische Einrichtungen oder auch Innenhochdruckumformungsstufen sein.

Die Transporteinrichtungen 6 sind ebenfalls an sich bekannt und beispielsweise als System mehrerer Handhabungsroboter oder als programmierbares Zweiachsensystem ausgebildet. Es wird deshalb im folgenden auf den Aufbau und die verschiedenen Ausgestaltungsmöglichkeiten derselben nicht näher eingegangen. Die Transporteinrichtungen 6 können hierbei auch von dem nicht dargestellten Antrieb der Umformvorrichtung 1 angetrieben sein. Die Transportrichtung der Werkstücke 5 innerhalb der Umformvorrichtung 1 ist in den Figuren durch einen mit "A" bezeichneten Pfeil dargestellt.

Zwischen den Umformstufen 2 befinden sich weitere Bearbeitungseinrichtungen 7, durch welche lokal Energie in die Werkstücke 5 eingebracht werden kann. Die Bearbeitungseinrichtungen 7 können als Laser-, Wasser-, Plasma, oder Sandstrahl-Bearbeitungseinrichtungen 7 oder auch als Bearbeitungseinrichtungen 7 zum Einbringen elektromagnetischer Energie, z.B. über Induktion oder Leitung, ausgebildet sein und sind jeweils als separate Stufe in der Umformvorrichtung 1 vorgesehen.

Sämtliche der im folgenden beschriebenen Bearbeitungseinrichtungen 7 sind der Einfachheit der Beschreibung halber als Laserstrahl- bzw. Laser-Bearbeitungseinrichtungen 7 ausgebildet. Die Bearbeitungseinrichtungen 7 bilden einzelne, separate Stufen innerhalb der Umformvorrichtung 1, dienen wie die Umformstufen 2 zur Bearbeitung der Werkstücke 5 und sind diesen gleichgestellt. Eine solche Bearbeitung durch die Laser-Bearbeitungseinrichtung 7 kann, wie nachfolgend näher beschrieben, eine Schneidbearbeitung, eine Schweißbearbeitung, eine Auftragsbearbeitung, eine Abtragebearbeitung oder eine Bearbeitung zur Wärmebehandlung der Werkstücke 5 sein. Die Umformvorrichtung 1 hat einen bestimmten Takt, in welchem die Werkstücke 5 bearbeitet und aus der letzten Umformstufe 2 ausgeworfen bzw. ausgegeben werden. Der Takt der Bearbeitung der Werkstücke 5 ist eine regelmäßige Abfolge von Bearbeitungsvorgängen. Dieser Takt bezieht sich auf die gesamte Umformvorrichtung 1, wobei zwischen den einzelnen Umformstufen bzw. den Bearbeitungseinrichtungen 7 ein gewisser Phasenversatz entstehen kann. Die Bearbeitungseinrichtungen 7 können hierbei in diesem Takt der Umformvorrichtung 1 arbeiten.

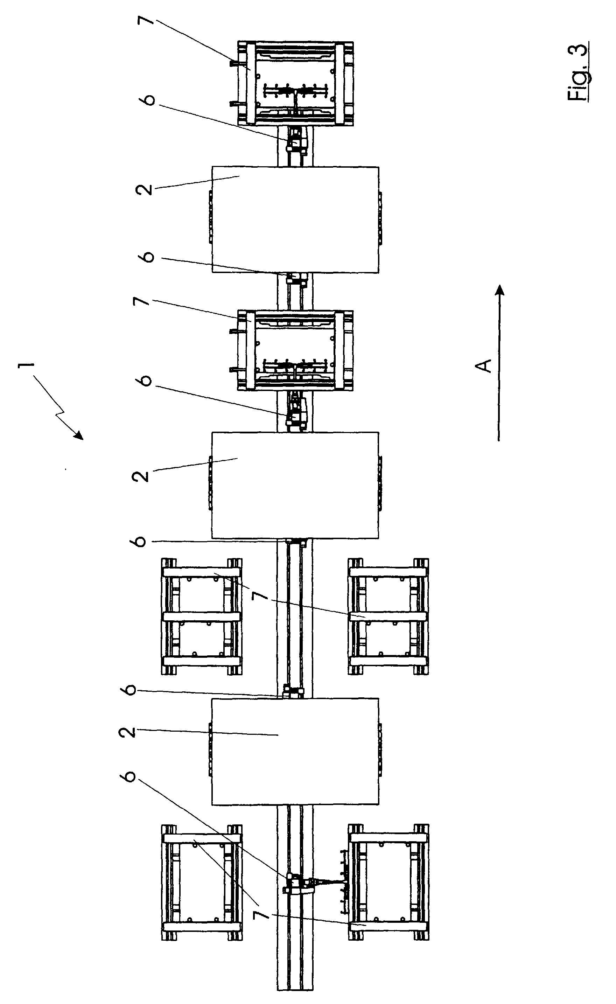

Wie in Fig. 3 erkennbar, können nach einer der Umformstufen 2 auch zwei Bearbeitungseinrichtungen 7 parallel angeordnet sein, z.B. wenn die Bearbeitung der Werkstücke 5 mit den Bearbeitungseinrichtungen 7 eine längere Zeit in Anspruch nimmt und dennoch die gleiche Anzahl an Werkstücken 5 hergestellt werden soll wie mit der vorhergehenden Umformstufe 2. Von den beiden parallel zueinander angeordneten Bearbeitungseinrichtungen 7 werden die Werkstücke 5 dann wieder zu der nächsten Umformstufe 2 zusammengeführt.

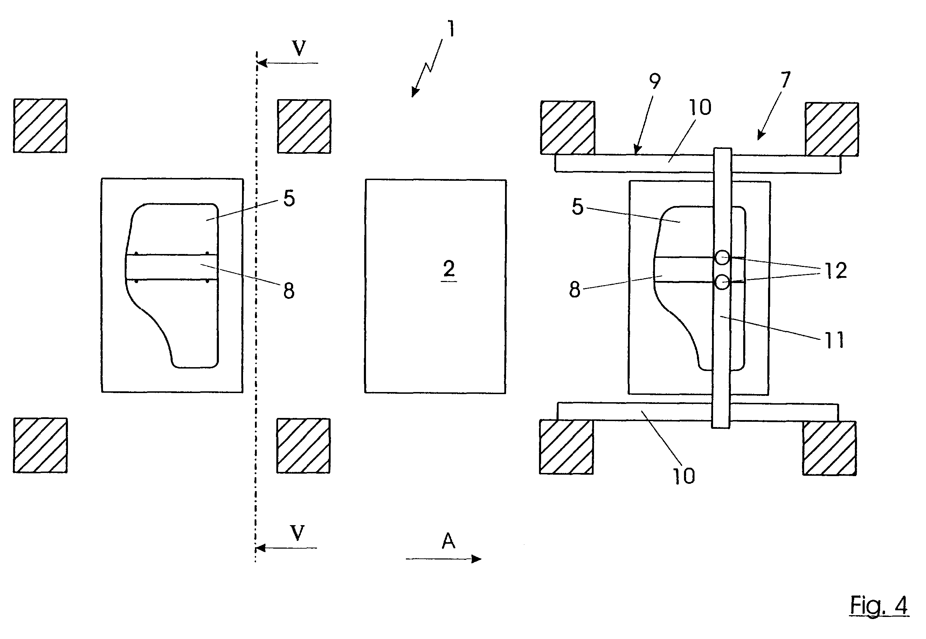

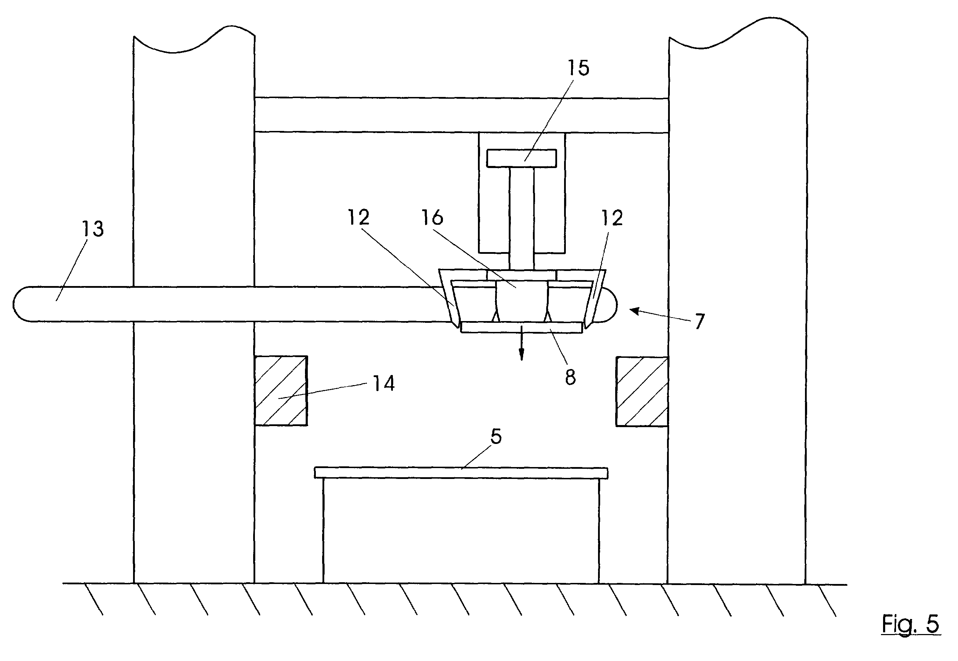

Fig. 4 zeigt die Integration einer Laser-Bearbeitungseinrichtung 7 in eine Umformvorrichtung 1 an einem konkreten Beispiel. Es sind hierbei zwei Bearbeitungseinrichtungen 7 und eine Umformstufe 2 der Umformvorrichtung 1 dargestellt, wobei in der ersten Bearbeitungseinrichtung 7 eine Verstärkungsplatine 8 durch ein in Fig. 5 dargestelltes Magnetband 13 in die Umformvorrichtung 1 eingefahren und auf ein vorbearbeitetes Werkstück 5 durch Punktschweißen aufgebracht wird. Das Werkstück 5 wird durch eine in diesem Fall nicht dargestellte Transporteinrichtung 6 zu der nächsten Umformstufe 2, in diesem Fall einer Ziehstufe, weitergegeben. In dieser Ziehstufe findet eine an sich bekannte umformende Bearbeitung des Werkstücks 5 statt.

Von dort gelangt das Werkstück 5 durch eine weitere Transporteinrichtung 6 zu einer nächsten Laser-Bearbeitungseinrichtung 7, welche in diesem Fall eine Handhabungseinrichtung 9, nämlich einen Kreuztisch 9 mit zwei Längstraversen 10 und einer auf denselben verlaufenden Quertraverse 11 aufweist. Die Laser-Bearbeitungseinrichtung 7 ist des weiteren mit zwei als Laserköpfen ausgebildeten Bearbeitungselementen 12 versehen. Selbstverständlich könnte es sich um jede beliebige Anzahl von Laserköpfen 12 an der Laser-Bearbeitungseinrichtung 7 und auch um beliebig viele Handhabungseinrichtungen 9 handeln. Im allgemeinen Fall einer Bearbeitungseinrichtung 7 handelt es sich hierbei um Bearbeitungselemente bzw. Bearbeitungswerkzeuge 12, welche somit auch Elemente zur Bearbeitung der Werkstücke 5 mit Wasserstrahlen, Sandstrahlen oder Plasmastrahlen oder auch um Bearbeitungselemente 12 zum Einbringen von elektromagnetischer oder andersartiger Energie an einem bestimmten Punkt in die Werkstücke 5 sein könnten.

Mit den Laserköpfen 12 kann die zuvor wie oben beschrieben angepunktete Verstärkungsplatine 8 an dem Werkstück 5 festgeschweißt werden. Hierzu werden die Laserköpfe 12 durch den Kreuztisch 9 in gewünschter Weise zweidimensional über das Werkstück 5 bewegt. Selbstverständlich wäre es hier auch möglich, Laserköpfe 12 einzusetzen, mittels welchen Schneid- oder andere Bearbeitungen an dem Werkstück 5 vorgenommen werden könnten.

Der gesamte Bearbeitungsbereich ergibt sich durch Relativbewegung zwischen den Laserköpfen bzw. den Bearbeitungselementen 12 und der Oberfläche des Werkstücks 5 entlang vorgegebener bzw. programmierter Bahnen. Dieser Bereich kann somit auch annähernd bzw. vollständig die Größe des Werkstücks 5 einnehmen.

Zwischen dem Werkstück 5 und der Bearbeitungseinrichtung 7 bzw. dem Bearbeitungselement 12 findet eine Relativbewegung statt, welche für die Bearbeitung der Werkstücke 5 sorgt. Diese Relativbewegung kann entweder durch Verfahren des Werkstücks 5 oder des Bearbeitungselements 12 erreicht werden, wobei in dem oben genannten Beispiel die Handhabungseinrichtung 9 für die Relativbewegung sorgt und somit eine bahngesteuerte Bearbeitung ermöglicht. Wie bereits oben erwähnt wäre auch durch Bewegen des Werkstücks 5 eine bahngesteuerte Bearbeitung desselben möglich.

Von dieser Laser-Bearbeitungseinrichtung 7 gelangt das Werkstück 5 in nicht dargestellter, jedoch an sich bekannter Weise an eine weitere Umformstufe 2, die hinter der Laser-Bearbeitungseinrichtung 7 angeordnet ist. Sollte nach der Laser-Bearbeitungseinrichtung 7 das Werkstück 5 fertiggestellt sein, so kann dieses natürlich auch abtransportiert werden.

Zur Versorgung der Laserköpfe 12 notwendige Laserstrahlquellen können beispielsweise als Nd-YAK-Laser oder als CO₂-Laser ausgeführt sein und sind nicht dargestellt. Im erstgenannten Fall wird der Laserkopf 12 über Lichtwellenleiter, im zweiten Fall über eine Spiegeloptik mit Licht bzw. Energie versorgt.

In Fig. 5 ist die erste Laser-Bearbeitungseinrichtung 7 aus Fig. 4 in einer Schnittdarstellung gezeigt. Hierbei wird die Verstärkungsplatine 8 durch eine zusätzliche Zuführeinrichtung 13, nämlich ein von der Seite eingreifendes Magnetband 13, dem Werkstück 5 zugeführt, wodurch diese beiden Teile wie oben beschrieben miteinander durch Schweißpunkte verbunden werden können. In Fig. 5 ist des weiteren als Teil der Transporteinrichtung 6 ein Hubbalken 14, welcher als Führungselement 14 dient, sowie eine Hubeinrichtung 15 für die Verstärkungsplatine 8 und den Laserkopf bzw. die Laserköpfe 12 dargestellt, welche mit einer Vakuumsaugeinrichtung 16 zum Halten der Verstärkungsplatine 8 versehen ist. Der Hubbalken 14 ist in an sich bekannter Weise heb- und senkbar und dient als Führung von nicht dargestellten Quertraversen, an denen Haltemittel zum Transportieren der Werkstücke angebracht sind. Die Hubeinrichtung 15 drückt dabei die Verstärkungsplatine 8 auf das Werkstück 5 auf und die Laserköpfe 12 punktverschweißen es mit demselben. Die hierzu notwendige Steuerung kann durch eine nicht dargestellte Steuereinheit der Umformvorrichtung 1 erfolgen. Das Führungselement 14 ist hier ein Hubbalken, es kann sich jedoch auch um ein andersartiges Führungselement 14 handeln.

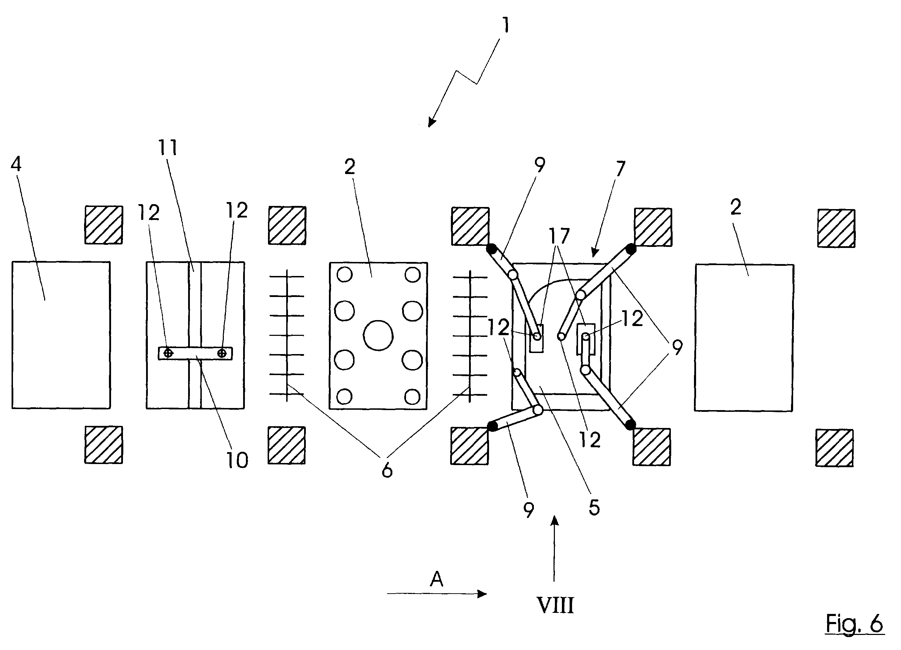

In Fig. 6 ist in einer Draufsicht eine weitere Möglichkeit zur Integration einer oder mehrerer der Laser-Bearbeitungseinrichtungen 7 in die Umformvorrichtung 1 dargestellt. Die Bleche 3 werden dabei von dem Platinenlader 4 in die Umformvorrichtung 1 eingebracht. Als erste Bearbeitungsstufe ist hierbei eine der Laser-Bearbeitungseinrichtungen 7 mit dem bereits oben verwendeten Kreuztisch 9 und zwei Laserköpfen 12 vorgesehen. Der Kreuztisch 9 weist im Gegensatz zu dem in Fig. 4 dargestellten nur jeweils eine Längstraverse 10 und eine Quertraverse 11 auf. Diese Laser-Bearbeitungseinrichtung 7 arbeitet ähnlich zu der in Fig. 4 dargestellten, wobei die Bleche 3 einem Formschnitt unterzogen werden, d.h. von den Blechen werden in nicht dargestellter Weise Ecken oder Ausnehmungen abgeschnitten, um beispielsweise aus einem Trapezschnitt eine für die nachfolgenden Umformoperationen geeignete Formschnittplatine als Werkstück 5 zu erstellen. Alternativ zu dem Kreuztisch könnte die Handhabungseinrichtung 9 in nicht dargestellter Weise auch als Portal ausgebildet sein.

Durch die in diesem Fall stark schematisiert dargestellte Transporteinrichtung 6 wird das Werkstück 5 an eine weitere Umformstufe 2, nämlich in diesem Fall eine Ziehstufe, weitergegeben. Von dort gelangt das Werkstück 5 über eine weitere Transporteinrichtung 6 zu der nächsten Laser-Bearbeitungseinrichtung 7. Dabei sind die Laserköpfe 12 auf als Schwenkarm-Robotern 9 ausgebildeten Handhabungseinrichtungen angebracht. Die Laserköpfe 12 sind in der Lage, das Werkstück 5 auf die verschiedensten Arten zu bearbeiten, nämlich durch eine Schneidbearbeitung, eine Schweißbearbeitung, eine Auftragsbearbeitung, eine Abtragebearbeitung oder eine Bearbeitung zur Wärmebehandlung. Im vorliegenden Fall dienen die Laserköpfe 12 dazu, Ausnehmungen 17 in das Werkstück 5 einzubringen. Beispielsweise können dies Fenster in den Türen von Kraftfahrzeugen sein. Die Laserköpfe 12 auf den Robotern 9 können dabei völlig unabhängig voneinander in allen drei Raumrichtungen bewegt und um zwei oder mehr Winkel geschwenkt werden. Somit sind auch kompliziert geformte Werkstücke 5 bearbeitbar. Beispielsweise kann auch in ein Werkstück 5, welches später noch umgeformt wird, eine nicht dargestellte Bohrung derart eingebracht werden, daß sie zwar vor der Umformung unrund ist, nach der Umformung jedoch exakt rund. Je nach Art der Programmierung der Roboter 9 kann dabei bereits mit der Bearbeitung begonnen werden, während die Transporteinrichtung 6 noch nicht ihre Endposition erreicht hat, was eine entsprechende Zeitersparnis zur Folge hat.

Von dieser Laser-Bearbeitungseinrichtung 7 wird das bearbeitete Werkstück 5 mittels einer weiteren, nicht dargestellten Transporteinrichtung 6 zu der nächsten Umformstufe 2 weitergegeben. Selbstverständlich könnte auch nach der beschriebenen Laser-Bearbeitungseinrichtung 7 eine weitere Laser-Bearbeitungseinrichtung 7 oder jede andere Art der Bearbeitungseinrichtung 7 mit lokalem Energieeintrag in die Werkstücke 5 folgen, welche dann beispielsweise eine Wärmebehandlung an den Werkstücken 5 vornehmen könnte.

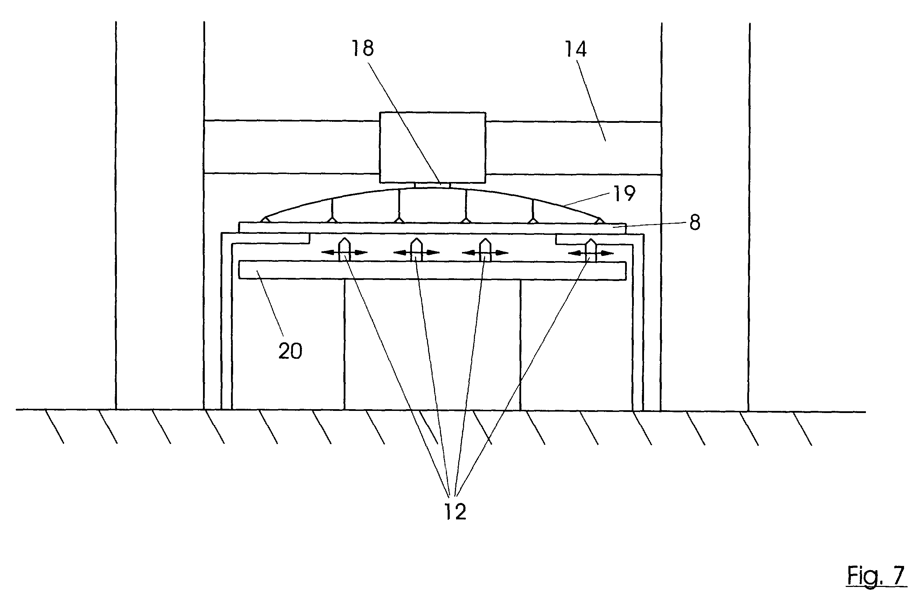

Fig. 7 stellt eine Abwandlung der ersten Laser-Bearbeitungseinrichtung 7 aus Fig. 6 dar, welche ebenfalls den oben beschriebenen Formschnitt an dem Werkstück 5 vornehmen kann. Hierbei wird das Werkstück 5 durch eine an dem Führungselement 14 der Transporteinrichtung 6 angebrachte Saugerbrücke 18 mit einer zugehörigen Saugerspinne 19 zu der Laser-Bearbeitungseinrichtung 7 gebracht, welche in diesem Fall aus vier verschieblich auf einer Quertraverse 20, die ihrerseits quer zu ihrer Ausdehnung verschieblich ist, angebrachten Laserköpfen 12 besteht. Die Verschieblichkeit der Laserköpfe 12 ist durch Pfeile angedeutet. Dadurch ist es möglich, das von oben zugeführte Werkstück 5 bereits schneidend zu bearbeiten, wenn die Saugerbrücke 18 das Werkstück 5 oberhalb der Quertraverse 20 abgelegt hat und sich noch nicht vollständig von demselben entfernt hat. Die Elemente Saugerbrücke 18 und Saugerspinne 19 sind in der Umformtechnik allgemein üblich, weshalb hier nicht näher auf dieselben eingegangen werden soll.

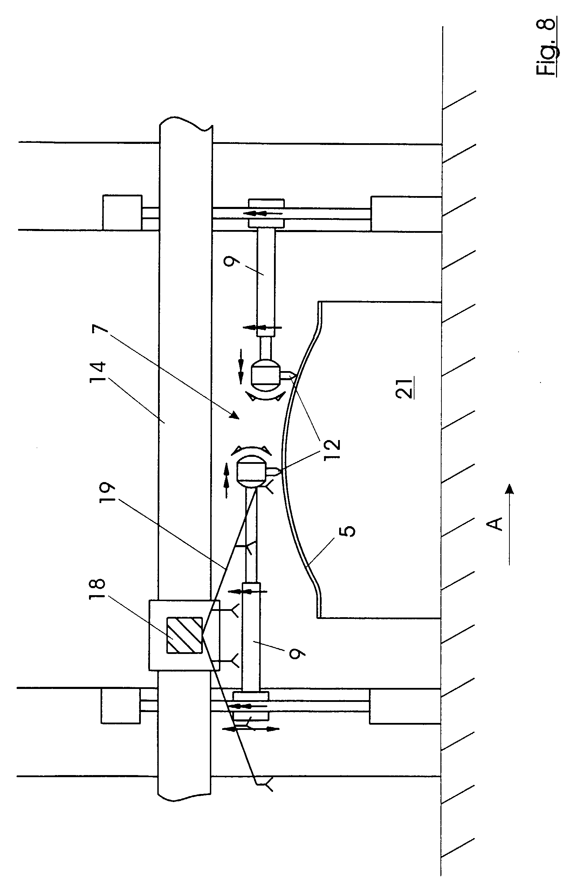

Fig. 8 zeigt in einer Seitenansicht die in Fig. 6 dargestellte dritte Bearbeitungseinrichtung 7. Die Laserköpfe 12 sind wie in der zweiten Stufe aus Fig. 6 auf als Schwenkarm-Robotern ausgebildeten Handhabungseinrichtungen 9 angebracht, welche gemäß einem kartesischem Koordinatensystem dreidimensional verfahren werden können. Dies ermöglicht auch ein Bearbeiten dreidimensional ausgeformter Werkstücke 5. Zusätzlich kann auch ein Verschwenken der Laserköpfe 12 oder ein Verdrehen einzelner Achsen der Handhabungseinrichtung 9 vorgesehen sein. Das Verdrehen der Achsen sowie weitere mögliche Bewegungen der Handhabungseinrichtung 9 sind durch entsprechende Pfeile angedeutet. Auch hierbei ist die zu der Transporteinrichtung 6 gehörende und an dem Hubbalken 14 derselben angebrachte Saugerbrücke 18 mit der Saugerspinne 19 dargestellt, durch welche das Werkstück 5 in die Laser-Bearbeitungseinrichtung 7 gebracht und auf einem Ablageelement 21 abgelegt werden kann. Dabei kann die Laserbearbeitung mit den in Transportrichtung hinteren Laserköpfen 12 schon beginnen, bevor die beladende Saugerbrücke 18 zurückgefahren wurde.

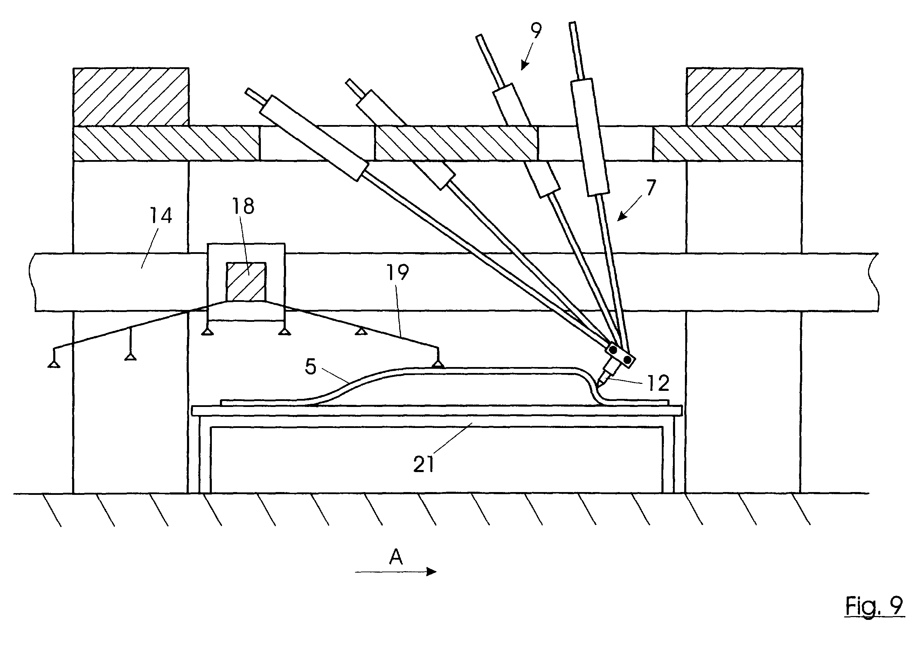

Fig. 9 zeigt eine alternative Ausführung der Handhabungseinrichtung 9, welche als Roboter mit Parallelkinematik ausgebildet ist. Derart ausgebildete Roboter 9 können große Verfahrgeschwindigkeiten erreichen und besitzen eine hohe Steifigkeit, wodurch eine sehr genaue Bearbeitung möglich ist. Hierdurch lassen sich nicht ebene Werkstücke 5 ebenfalls mit dem an dem Roboter 9 angebrachten Bearbeitungselement 12 wie oben beschrieben bearbeiten.

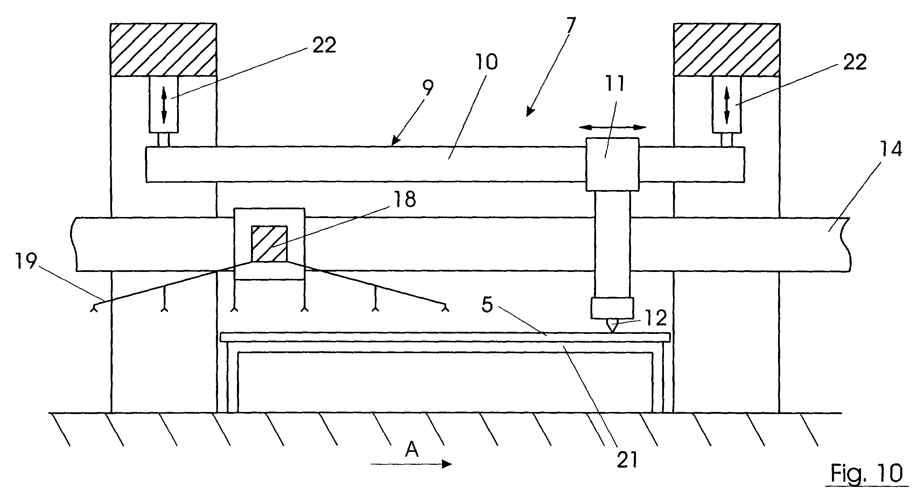

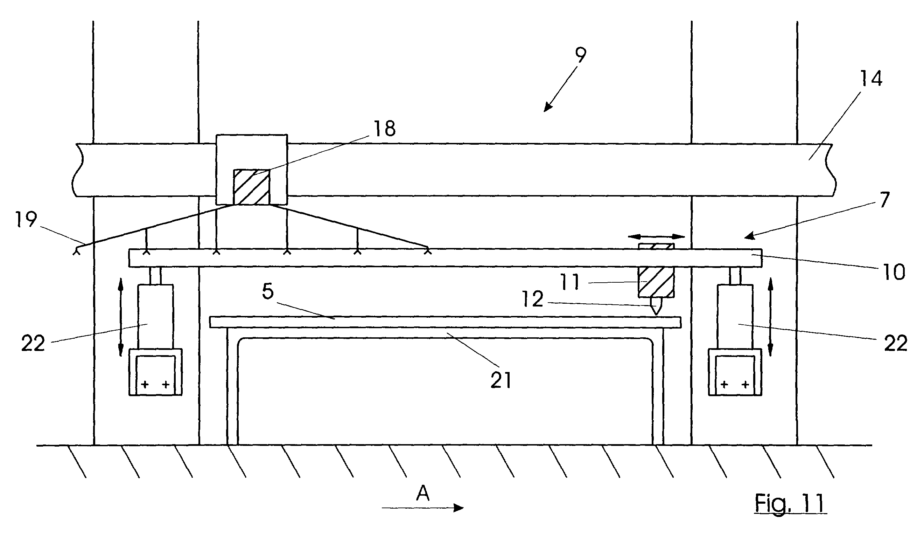

Die Figuren 10 und 11 zeigen weitere Seitenansichten von Laser-Bearbeitungseinrichtungen 7, wobei jeweils ein Laserkopf 12 auf dem Kreuztisch 9, wiederum bestehend aus Längstraversen 10 und einer Quertraverse 11, angebracht ist. In dem Ausführungsbeispiel gemäß Fig. 10 befindet sich dabei der Kreuztisch 9 oberhalb der Hubbalken 14 der Transporteinrichtung 6 für die Werkstücke 5, an welchem auch die Saugerbrücke 18 angebracht ist. Dagegen ist gemäß Fig. 11 der Kreuztisch 9 für die Laserköpfe 12 unterhalb der Transporteinrichtung 6 für die Werkstücke 5 angeordnet. Die die Laserköpfe 12 tragende Quertraverse 11 wird für das Entnehmen und Einlegen der Teile in Transportrichtung nach vorne bzw. nach hinten gefahren. Bei der Ausführung gemäß Fig. 10 kann der Laserkopf 12 auch über die Hubbalken 14 angehoben werden.

Die Kreuztische 9 sind in beiden Fällen mit Hubelementen 22 versehen, welche eine dreidimensionale Bearbeitung durch die Laserköpfe 12 ermöglichen. Eine solche dreidimensionale Bearbeitung der Werkstücke 5 ist dann sinnvoll, wenn die Werkstücke 5 bereits vorher in einer Ziehstufe bearbeitet wurden und somit eine dreidimensionale Gestalt aufweisen. Die Hubelemente 22 greifen dabei jeweils an den Längstraversen 10 an.

In beiden dargestellten Fällen ist es möglich, während des Zurückfahrens der Saugerbrücke 18 bereits mit der Bearbeitung der Werkstücke 5 durch die Laserköpfe 12 zu beginnen. Die Programmierung der Abläufe in der Umformvorrichtung 1 sorgt in diesem Zusammenhang dafür, daß es nicht zu Kollisionen zwischen Teilen der Transporteinrichtung 6 und Teilen der Laser-Bearbeitungseinrichtung 7 kommt.

Daneben kann das Führungselement 14 der Transporteinrichtung 6 auch für die Führung der die Laserköpfe 12 tragenden Quertraverse 11 verwendet werden. Im übrigen kann die die Laserköpfe 12 tragende Quertraverse 11 auch gelenkig und mit einer nicht dargestellten Teleskophülse ausgerüstet sein, um eine Schrägstellung der Quertraverse 11 und damit unterschiedliche Geschwindigkeiten der Laserköpfe 12 in Transportrichtung zu ermöglichen. Dies ist zum Erreichen schräger Schnitte bzw. Verschweißungen durch die Laserköpfe 12 vorteilhaft.

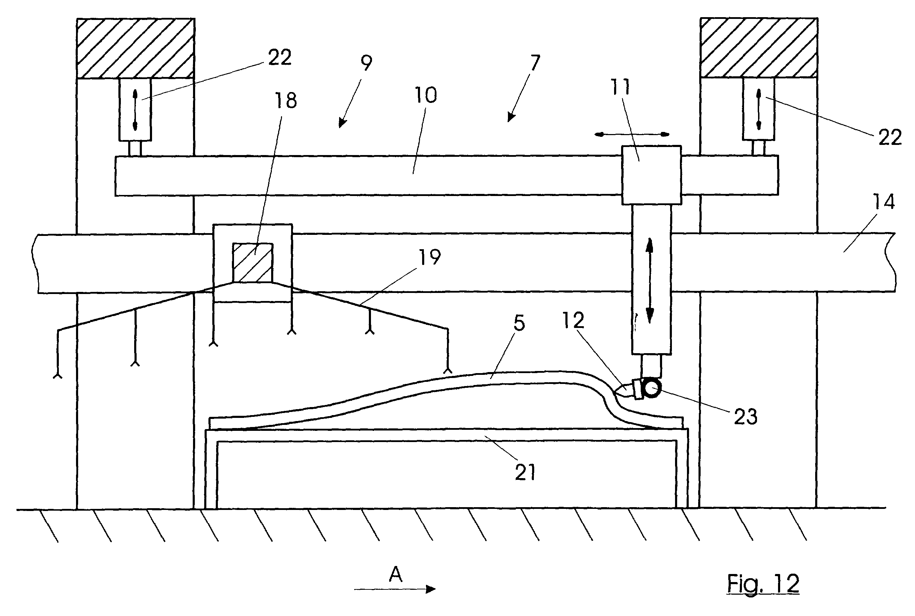

In Fig. 12 ist eine alternative Ausführungsform der Laser-Bearbeitungseinrichtung 7 dargestellt. Der prinzipielle Aufbau stimmt mit dem in Fig. 10 dargestellten überein, wobei jedoch das Bearbeitungselement bzw. der Laserkopf 12 über ein Schwenkelement 23 an der aus der Längstraverse 10 und der Quertraverse 11 bestehenden Handhabungseinrichtung 9 angebracht ist und somit verschwenkt werden kann. Dadurch sind auch, wie dargestellt, komplizierte Formen von Werkstücken 5 bearbeitbar. Durch die Verschwenkung des Bearbeitungselements 12 kann der von diesem ausgehende Strahl stets senkrecht auf das Werkstück 5 auftreffen. Die Beweglichkeit der Handhabungseinrichtung 9 ist durch Pfeile angedeutet.

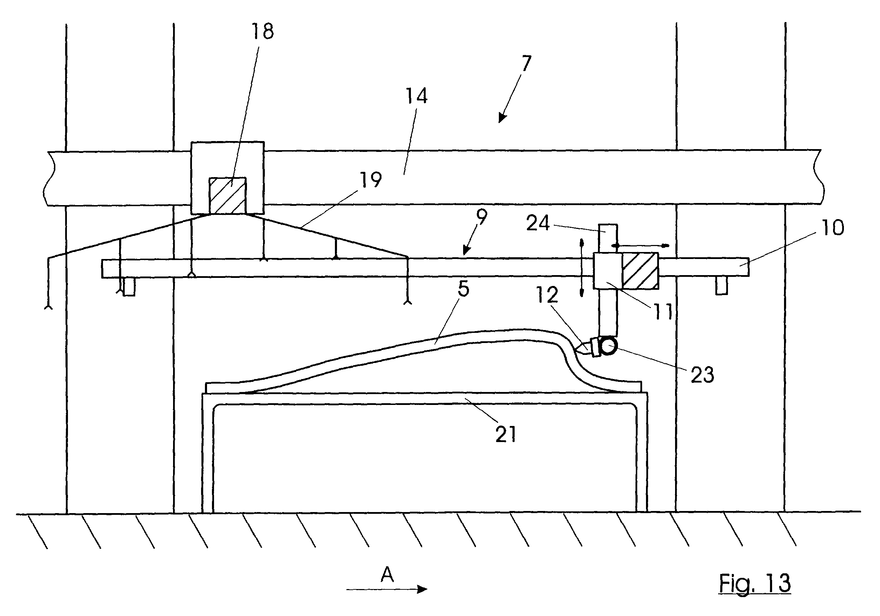

Fig. 13 zeigt eine weitere Möglichkeit der Laser-Bearbeitungseinrichtung 7, wobei das Bearbeitungselement 12 ebenfalls schwenkbar über das Schwenkelement 23 an der Handhabungseinrichtung 9 angebracht ist. Es kann hierbei auf die Hubelemente 22 verzichtet werden, da das Bearbeitungselement 12 über ein Vertikalführungselement 24 an der Quertraverse 11 angeordnet ist und somit in vertikaler Richtung auf das Werkstück 5 zu oder von diesem weg bewegt werden kann.

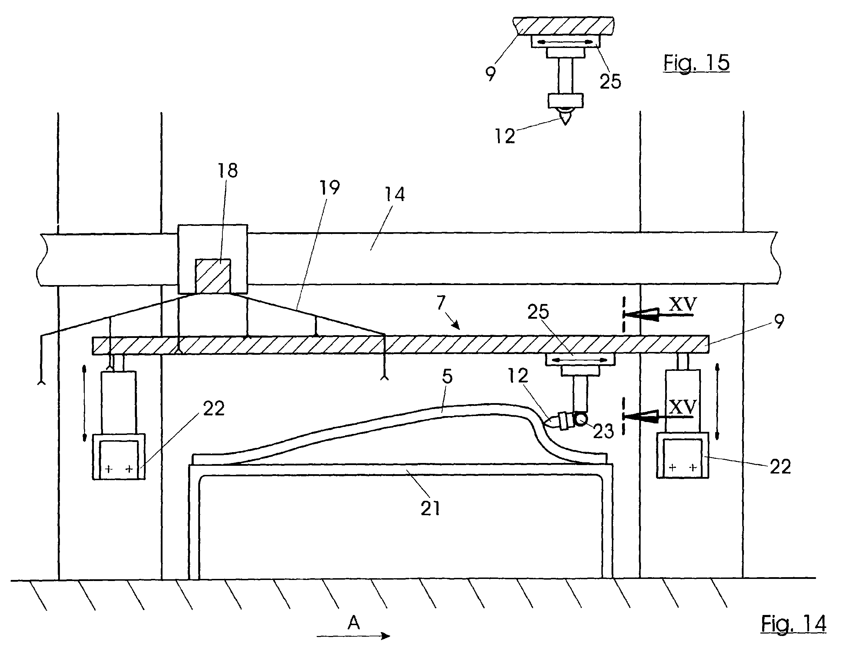

Bei der Ausführung gemäß Fig. 14 ist die Handhabungseinrichtung 9 ein plattenförmiges Element, an welcher das Bearbeitungselement 12 über ein Linearführungselement 25 schwenkbar angebracht ist. Eine derartige Linearführung über das Linearführungselement 25, welche auch als Direktführung bezeichnet wird, ermöglicht das Anordnen mehrerer Bearbeitungselemente 12 an dem plattenförmigen Element 9. Die Linearführungselemente 25 können dabei beliebig in einer Ebene an dem plattenförmigen Element 9 verfahren werden und so das Bearbeitungselement bzw. den Laserkopf 12 zur Bearbeitung des Werkstücks 5 über dasselbe bewegen. Selbstverständlich ist auch das Anbringen mehrerer Bearbeitungselemente 12 an ein und demselben Linearführungselement 25 möglich. Das plattenförmige Element 9 ist über die Hubelemente 22 in der Höhe verstellbar. Die Linearführungselemente 25 werden dabei über Magnetkraft an dem plattenförmigen Element 9 gehalten.

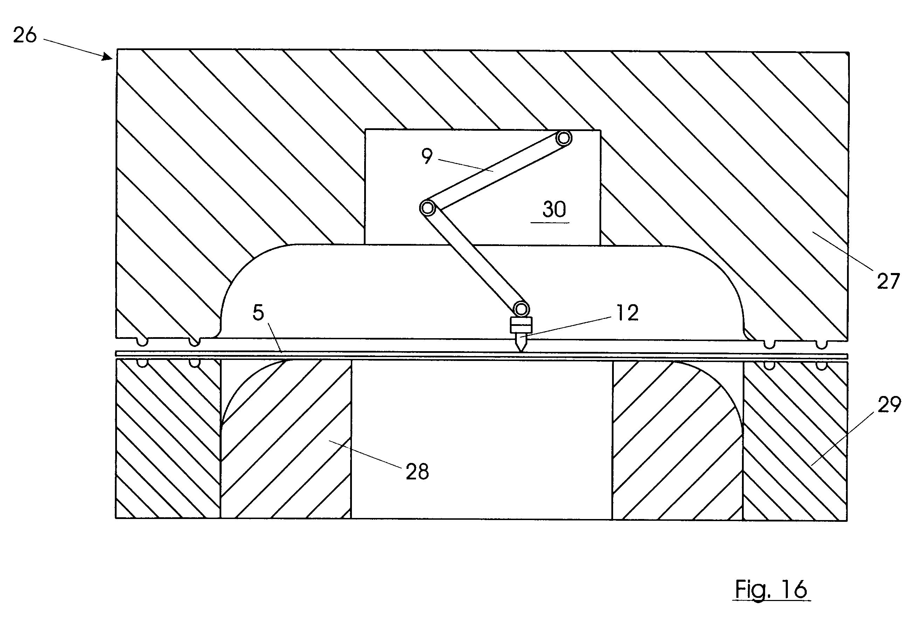

In Fig. 15 ist ein Schnitt durch das plattenförmige Element 9 dargestellt. Hierbei sind das Bearbeitungselement bzw. der Laserkopf 12 und das Linearführungselement 25 ebenfalls erkennbar.

Die Figuren 16, 17 und 18 zeigen die Integration der Laser-Bearbeitungseinrichtung 7 direkt in einem Umformwerkzeug 26, welches einer der Umformstufen 2 zugeordnet ist. Das Umformwerkzeug 26 besteht hierbei in an sich bekannter Weise aus einem Werkzeugoberteil 27, einem Werkzeugunterteil 28 und einem Blechhalter 29, welcher das umzuformende Werkstück 5 gemeinsam mit dem Werkzeugoberteil 27 festhält. Der Blechhalter 29 fährt gegen den Federdruck einer nicht dargestellten Feder nach unten, wenn das Werkzeugoberteil 27 auf dem Werkstück 5 bzw. auf dem Werkzeugunterteil 28 aufsetzt.

Gemäß Fig. 16 befindet sich in dem Werkzeugoberteil 27 eine Ausnehmung 30, in welcher eine als Schwenkarm-Roboter 9 ausgebildete Handhabungseinrichtung mit einem Bearbeitungselement bzw. Laserkopf 12 angeordnet ist. Der Schwenkarm-Roboter 9 ist in der Lage, den Laserkopf 12 so entlang des Werkstücks 5 zu bewegen, daß dieses durch den daran angebrachten Laserkopf 12 dreidimensional bearbeitet, beispielsweise geschnitten, wird. Dies ist auch während der Umformung des Werkstücks 5 durch das Umformwerkzeug 26 möglich, und zwar in einer Weise, daß eine Beschädigung des Umformwerkzeugs 26 ausgeschlossen ist. Dabei ist vor allem vorteilhaft, daß das Werkstück 5 zur Verhinderung elastischer Entspannung im Umformwerkzeug 26 gehalten ist.

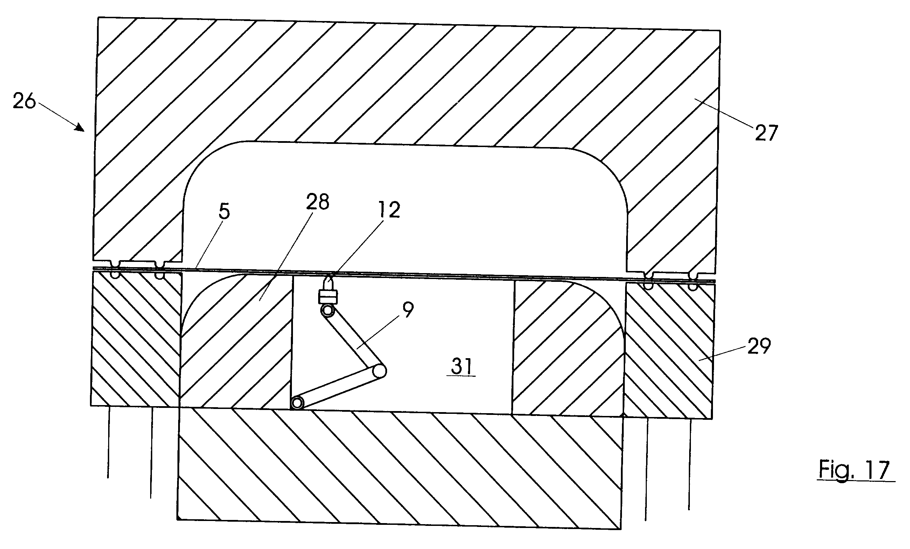

In Fig. 17 befindet sich der Schwenkarm-Roboter 9 in einer Ausnehmung 31 des Werkzeugunterteils 28 und hat die gleiche Funktion wie der Schwenkarm-Roboter 9 aus Fig. 16.

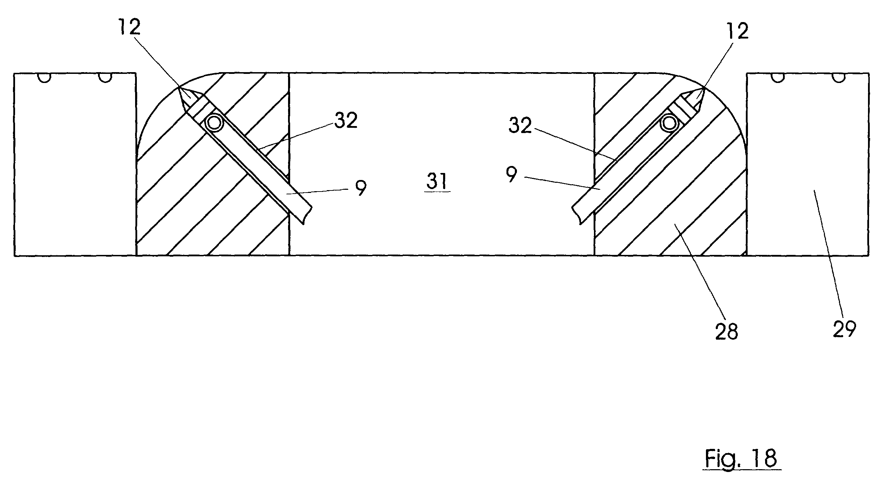

Gemäß Fig. 18 sind in dem Werkzeugunterteil 28 ausgehend von der Ausnehmung 31 Bohrungen 32 angeordnet, in welchen sich jeweils ein Laserkopf 12 befindet. Diese Laserköpfe 12 können das Werkstück 5 während der Umformbewegung in der Umformstufe 2 bearbeiten, z.B. einer Wärmebehandlung unterziehen und so eine ansonsten notwendige Glühbearbeitung ersetzen. Die Laserköpfe 12 können wie dargestellt über einen Schwenkarm-Roboter 9 oder auch ortsfest in der Bohrung 32 untergebracht sein- Eine ähnliche Konfiguration der Laserköpfe 12 ist auch in dem Werkzeugoberteil 27 denkbar.

Selbstverständlich wird auch bei der in Fig. 18 dargestellten Integration der Laser-Bearbeitungseinrichtung 7 in das Umformwerkzeug 26 darauf geachtet, daß durch den von den Laserköpfen 12 ausgehenden Laserstrahl keine Teile des Umformwerkzeugs 26 beschädigt werden.

## Patentansprüche

1. Vorrichtung zum Umformen von Werkstücken mit wenigstens einem Umformwerkzeug,
**dadurch gekennzeichnet,** daß
wenigstens eine Bearbeitungseinrichtung (7) mit lokalem Energieeintrag zur Bearbeitung der Werkstücke (5) als separate Stufe innerhalb der Umformvorrichtung (1) vorgesehen ist.

2. Vorrichtung nach Anspruch 1,
**dadurch gekennzeichnet,** daß
mit der wenigstens einen Bearbeitungseinrichtung (7) eine Strahlbearbeitung an den Werkstücken (5) durchführbar ist.

3. Vorrichtung nach Anspruch 1 oder 2,
**dadurch gekennzeichnet,** daß
die wenigstens eine Bearbeitungseinrichtung (7) eine Laserstrahl-Bearbeitungseinrichtung oder eine Wasserstrahl-Bearbeitungseinrichtung oder eine Plasmastrahl-Bearbeitungseinrichtung oder eine Sandstrahl-Bearbeitungseinrichtung oder eine Kombination derselben ist.

4. Vorrichtung nach Anspruch 1,
**dadurch gekennzeichnet,** daß
mit der wenigstens einen Bearbeitungseinrichtung (7) elektromagnetische Energie in die Werkstücke (5) einbringbar ist.

5. Vorrichtung nach einem der Ansprüche 1 bis 4,
**dadurch gekennzeichnet,** daß
die wenigstens eine Bearbeitungseinrichtung (7) mit wenigstens einem Bearbeitungselement (12) zum Bearbeiten der Werkstücke (5) versehen ist.

6. Vorrichtung nach Anspruch 5,
**dadurch gekennzeichnet,** daß
das wenigstens eine Bearbeitungselement (12) bahngesteuert gegenüber den Werkstücken (5) verfahrbar ist.

7. Vorrichtung nach Anspruch 5,
**dadurch gekennzeichnet,** daß
die Werkstücke (5) gegenüber dem wenigstens einen Bearbeitungselement (12) bahngesteuert verfahrbar sind.

8. Vorrichtung nach Anspruch 5, 6 oder 7,
**dadurch gekennzeichnet,** daß
das wenigstens eine Bearbeitungselement (12) auf einer Handhabungseinrichtung (9) angebracht ist, weiche in die Umformvorrichtung (1) eingebunden ist.

9. Vorrichtung nach Anspruch 8,
**dadurch gekennzeichnet,** daß
die wenigstens eine Handhabungseinrichtung (9) in wenigstens zwei Achsrichtungen verfahrbar und/oder um wenigstens eine Schwenkachse verschwenkbar ist.

10. Vorrichtung nach Anspruch 8 oder 9,
**dadurch gekennzeichnet,** daß
die Handhabungseinrichtung programmierbar ist.

11. Vorrichtung nach Anspruch 8, 9 oder 10,
**dadurch gekennzeichnet,** daß
die Handhabungseinrichtung ein Kreuztisch (9) mit wenigstens einer Längstraverse (10) und wenigstens einer Quertraverse (11) ist.

12. Vorrichtung nach Anspruch 11,
**dadurch gekennzeichnet,** daß
die Quertraverse (11) in ihrer Führungsebene schräg einstellbar ist.

13. Vorrichtung nach Anspruch 8, 9 oder 10,
**dadurch gekennzeichnet,** daß
die Handhabungseinrichtung als Parallelkinematik-Roboter (9) oder als Schwenkarm-Roboter ausgebildet ist.

14. Vorrichtung nach Anspruch 8, 9 oder 10,
**dadurch gekennzeichnet,** daß
die Handhabungseinrichtung ein plattenförmiges Element (9) mit wenigstens einem daran angeordneten Linearführungselement (25) ist.

15. Vorrichtung nach Anspruch 8, 9 oder 10,
**dadurch gekennzeichnet,** daß
die Handhabungseinrichtung ein Portal (9) ist.

16. Vorrichtung nach einem der Ansprüche 8 bis 15,
**dadurch gekennzeichnet,** daß
innerhalb einer Bearbeitungseinrichtung (7) mehrere Handhabungseinrichtungen (9) vorgesehen sind, welche unabhängig voneinander verfahrbar sind.

17. Vorrichtung nach Anspruch 5 und/oder 7,
**dadurch gekennzeichnet,** daß
das wenigstens eine Bearbeitungselement (12) fest in die Umformvorrichtung (1) eingebunden ist.

18. Vorrichtung nach einem der Ansprüche 5 bis 17,
**dadurch gekennzeichnet,** daß
das wenigstens eine Bearbeitungselement als Laserkopf (12) ausgebildet ist.

19. Vorrichtung nach einem der Ansprüche 5 bis 18,
**dadurch gekennzeichnet,** daß
die Bearbeitungseinrichtung (7) mit dem Bearbeitungselement (12) innerhalb wenigstens eines der Umformwerkzeuge (26) angeordnet ist.

20. Vorrichtung nach Anspruch 19,
**dadurch gekennzeichnet,** daß
die Bearbeitungseinrichtung (7) mit dem Bearbeitungselement (12) in einer Ausnehmung (30) eines Werkzeugoberteils (27) und/oder eines Werkzeugunterteils (28) des Umformwerkzeugs (26) angeordnet ist.

21. Vorrichtung nach Anspruch 20,
**dadurch gekennzeichnet,** daß
die Bearbeitungseinrichtung (7) über eine Handhabungseinrichtung (9) in oder an dem Werkzeugoberteil (27) oder dem Werkzeugunterteil (28) angeordnet ist.

22. Vorrichtung nach Anspruch 20,
**dadurch gekennzeichnet,** daß
die Bearbeitungseinrichtung (7) ortsfest in dem Werkzeugoberteil (27) oder dem Werkzeugunterteil (28) angeordnet ist.

23. Vorrichtung nach einem der Ansprüche 1 bis 22,
**dadurch gekennzeichnet,** daß
die Umformvorrichtung (1) als Mehrstufenumformanlage mit mehreren Umformstufen (2) ausgebildet ist.

24. Vorrichtung nach Anspruch 23,
**dadurch gekennzeichnet,** daß
die Bearbeitungseinrichtung (7) zwischen zwei Umformstufen (2) angeordnet ist.

25. Vorrichtung nach einem der Ansprüche 1 bis 24,
**dadurch gekennzeichnet,** daß
die Werkstücke (5) Bleche (3) sind.

26. Vorrichtung nach einem der Ansprüche 1 bis 25,
**dadurch gekennzeichnet,** daß
zwei oder mehr Bearbeitungseinrichtungen (7) parallel zueinander angeordnet und einer gemeinsamen Umformstufe (2) nach- oder vorgeschaltet sind.

27. Verfahren zum Umformen von Werkstücken mit wenigstens einem Umformwerkzeug,
**dadurch gekennzeichnet,** daß
eine Bearbeitung der Werkstücke (5) durch eine Bearbeitungseinrichtung (7) mit lokalem Energieeintrag im Takt der Vorrichtung (1) durchgeführt wird.

28. Verfahren nach Anspruch 27,
**dadurch gekennzeichnet,** daß
zur Bearbeitung der Werkstücke (5) eine Relativbewegung zwischen der Bearbeitungseinrichtung (7) und den Werkstücken (5) stattfindet.

29. Verfahren nach Anspruch 28,
**dadurch gekennzeichnet,** daß
die Relativbewegung bahngesteuert durchgeführt wird.

30. Verfahren nach Anspruch 27, 28 oder 29,
**dadurch gekennzeichnet,** daß
durch die wenigstens eine Bearbeitungseinrichtung (7) eine Schneidbearbeitung und/oder eine Schweißbearbeitung und/oder eine Auftragsbearbeitung und/oder eine Abtragebearbeitung und/oder eine Bearbeitung zur Wärmebehandlung der Werkstücke (5) durchgeführt wird.
